(19) Europäisches Patentamt
European Patent Office
Office européen des brevets

(11) Veröffentlichungsnummer: **0 350 618 B1**

(12) **EUROPÄISCHE PATENTSCHRIFT**

(45) Veröffentlichungstag der Patentschrift: **02.02.94**

(21) Anmeldenummer: **89110249.3**

(22) Anmeldetag: **07.06.89**

(51) Int. Cl.⁵: **C08G 18/08**, C08G 18/64, C08G 18/71, C08G 18/80, C08J 3/20

# (54) Trägerharz für Pigmentpasten, seine Herstellung und Verwendung.

(30) Priorität: **15.06.88 DE 3820300**

(43) Veröffentlichungstag der Anmeldung:
**17.01.90 Patentblatt 90/03**

(45) Bekanntmachung des Hinweises auf die Patenterteilung:
**02.02.94 Patentblatt 94/05**

(84) Benannte Vertragsstaaten:
**AT BE CH DE ES FR GB GR IT LI LU NL SE**

(56) Entgegenhaltungen:
**EP-A- 0 121 837**
**EP-A- 0 234 395**
**EP-A- 0 272 665**
**EP-A- 0 303 158**
**US-A- 3 936 405**

(73) Patentinhaber: **HOECHST AKTIENGESELL-SCHAFT**

**D-65926 Frankfurt(DE)**

(72) Erfinder: **Hönel, Michael, Dr.**
**Wallstrasse 24**
**D-6500 Mainz(DE)**
Erfinder: **Ziegler, Peter, Dr.**
**Essenheimer Strasse 87**
**D-6500 Mainz(DE)**
Erfinder: **Sprenger, Walter**
**Ringstrasse 8**
**D-6110 Dieburg(DE)**
Erfinder: **Wendt, Wolfgang**
**Nussbaumstrasse 42**
**D-5600 Wuppertal 2(DE)**

EP 0 350 618 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

In der Lackindustrie ist es allgmein üblich, bei der Herstellung von pigmentierten Lacken die Pigmente in einem Teil des zur Verwendung gelangenden Bindemittels oder in speziellen Bindemitteln (Pastenharzen bzw. Pigment-Trägerharzen) zu vermahlen. Diese sogenannten Mahlpasten (bzw. Pigmentpasten) werden anschließend mit dem restlichen Bindemittel "aufgelackt".

Insbesondere werden solche Mahlpasten beim Einsatz von lösungsmittelarmen Elektrotauchlacken (K-ETL) benötigt, da

1. hochpigmentierte Mahlpasten mit geringem Lösemittelgehalt die Lösemittelbilanz nicht nachhaltig beeinflussen;
2. es sich bei dem Betrieb von K-ETL-Becken als vorteilhaft erweist, die Zugabe des Nachsetzmaterials mit zwei getrennten Komponenten, nämlich einer höherpigmentierten Farbkomponente und einer Klarlackkomponente, durchzuführen. Eine gegebenenfalls automatische Steuerung der Badführung wird dadurch wesentlich erleichtert;
3. Pigmente in der Regel nicht direkt in eine wäßrige Dispersion bzw. ein K-ETL-Bad eingebracht werden können. Die Gründe hierfür sind vielfältig. Zum einen tendieren (ungenügend benetzte) Pigmente in wäßrigen Systemen dazu, zu agglomerieren und entsprechend inadequate Niederschläge auf abgeschiedenen Filmen zu bilden (vor allem auf waagrechten Flächen des Werkstückes). Zum anderen müssen Pigmente sehr fein vermahlen werden (< 10 µm, vorzugsweise < 3 µm), um bei entsprechenden Benetzung stabile Pigment-Dispersionen bilden zu können.

Die für derartige Mahlpasten eingesetzten Pastenharze müssen eine Reihe von Eigenschaften erfüllen. Eine wichtige Eigenschaft ist dabei ein gutes Benetzungsvermögen für die jeweiligen Pigmente. Daneben müssen sie mit dem Hauptbindemittel gut verträglich sein und dürfen in der erforderlichen Menge die Eigenschaften des Hauptbindemittels nicht wesentlich verändern. Überdies sollen diese Pastenharze eine relativ niedrige Viskosität aufweisen. Weiterhin sollen auch hochpigmentierte Mahlpasten mit einem Pigment/Bindemittel-verhältnis (PBV) von > 2:1, vorzugsweise von > 6:1 und inbesondere von >12:1 lagerstabil sein, d. h., die Pigmente dürfen nicht sedimentieren bzw. Agglomerate bilden. Auch sollen die Pasten nicht eindicken (zum Beispiel durch Aufbau von Strukturviskosität oder Thixotropie), da sie für den Einsatz in der Praxis über einen längeren Zeitraum hinweg pumpfähig bleiben müsssen. Weiterhin ist es vorteilhaft, als spezielle Pastenharze Bindemittel einzusetzen, die unter den für K-ETL üblichen Bedingungen abscheidbar sind. Dadurch wird eine Anreicherung im Bad und damit eine Kontamination der Abwässer vermieden. Es dürfen auch derart abgeschiedene Pastenharze nicht nachteilig für Filmverlauf (zum Beispiel durch Kraterbildung) und Härtung sein.

In der AT-patentschrift 380 264 werden Pastenharze beschrieben, die durch gezielte Modifizierung von niedermolekularen Di- oder Polyepoxydverbindungen unter Einbau von Oxazolidingruppierungen erhalten werden. Diese Systeme zeichnen sich durch hohe Pigmentierung aus, neigen aber bei Alterung zum Aufbau von Thixotropie und Strukturviskosität.

Die EP-Offenlegungschriften 028 402 und 0 076 955 offenbaren gleichfalls Oxazolidingruppen tragende Bindemittel; allerdings kann ein PBV von 3:1 ohne Agglomeratbildung nicht überschritten werden.

In der US-Patentschrift 3 936 405 werden Oniumgruppen, insbesondere quaternäre Ammoniumgruppen tragende modifizierte Epoxidharze als günstige Pastenharze beschrieben. Die danach erhältlichen Mahlpasten ermöglichen ein PBV von ca. 4:1 (Beispiel XI).

Aus den EP-Offenlegungsschriften 107 088, 107 089 und 107 098 sind ebenfalls Kunstharze bekannt, die quaternäre Ammoniumgruppen tragen und als höher pigmentierbare Pastenharze verwendet werden können (PBV ≧ 20:1). Nachteilig ist bei diesen Pastenharzen u. a., daß trotz gleicher Abscheidebedingungen unterschiedliche Schichtstärken und Oberflächenqualitäten bei verschiedenen Untergründen auftreten.

In der Automobilindustrie kommen als Untergrunde vor allem Blankblech, zinkphosphatiertes Stahlblech, (feuer- oder eletrogalvanisch) verzinkte Stahlbleche und Aluminium in Betracht. Dabei ist es ein wesentliches Kriterium, daß neben störungsfreien Oberflächen (z.B. L-Blech-Test; keine Körnungen; keine Pieken, Stippen u. ä.) auch vergleichbare Schichtstärken erzielt werden. Insbesondere auf Aluminium neigen bekannte Pastenharze zu dicker und damit oft schwammiger Schicht.

In der EP-Offenlegungschrift 203 204 werden schließlich Pastenharze beschrieben, die Umsetzungsprodukte von aliphatischen Polyepoxiden mit Polyetheraminen sind. Pastenharze dieser Zusammensetzung zeigen vor allem gute Antischaumwirkung. Andererseits können nicht sehr hohe, stabile Pigmentierungshöhen (PBV) erzielt werden. Auch benötigen die K-ETL-Dispersionen spezielle Antikratermittel für die angeführten Bindemittel-Kombinationen.

Es wurde nun gefunden, daß sich vorstehende Nachteile durch Pastenharze auf Basis von modifizierten Cyclocarbonatverbindungen mit quaternären Ammoniumgruppen überraschenderweise weitgehend vermeiden lassen.

Die Erfindung betrifft daher Pigment pasten, die ein Pigment und ein Pastenharz enthalten, wobei das Pastenharz quaternäre Ammoniumgruppen, (b) OH-Gruppen,
(c) Urethanreste und (d) Gruppen der Formel (I) enthält

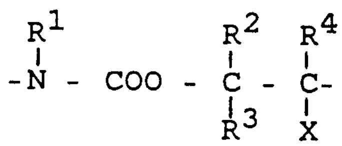 (I),

in der $R^1$ bis $R^4$ unabhängig voneinander für Wasserstoff oder einen Kohlenwasserstoffrest, vorzugsweise (Cyclo-) Alkylrest, mit 1 bis 10 C-Atomen, vorzugsweise 1 bis 6 G-Atomen, stehen und X Hydroxyl oder einen Urethanrest bedeutet,
wobei das mittlere Molekulargewicht ($\overline{M}n$; bestimmt mittels Gelchromatographie; PS-Standard) dieser Pastenharze 500 bis 10000 beträgt und wobei das Verhältnis Pigment : Pastenharz größen als 2:1 ist.

Die Pastenharze besitzen vorzugsweise mittlere Molekulargewichte ($\overline{M}_n$) von 1000 bis 5000. Die OH-Zahlen betragen zumeist 10 bis 200, vorzugsweise 20 bis 90 mg KOH/g und die Menge an quaternären Stickstoff pro Gramm beträgt im allgemeinen 0,2 bis 20, vorzugsweise 0,8 bis 5 Milliäquivalente.

Die Zahl der Gruppen (a) pro Molekül (statistisches Mittel) liegt im allgemeinen zwischen 1 bis 4, vorzugsweise 2 oder 3, die von (b) zwischen 1 und 20, vorzugsweise 2 bis 8, die von (c) zwischen 1 bis 6, vorzugsweise 2 bis 4, und die von (d) zwischen 1 bis 6, vorzugsweise 2 bis 4.

Die Urethanreste (c) und X in Formel (I) leiten sich in erster Linie von den weiter unten näher beschriebenen langkettigen Monoisocyanaten ($D_1$) ab, d.h. von Monoisocyanaten mit in der Regel 6 bis 22 C-Atomen, vorzugsweise 10 bis 18 C-Atomen, die von Haus aus nur eine Isocyanatgruppe enthalten, und oder von Poly (Di)isocyanaten mit einer freien Isocyanatgruppe, deren restliche Isocyanatgruppe(n) stabil verkappt ist (sind) (unter den Härtungsbedingungen also nicht entkappen) und deren Gesamt-C-Zahl im allgemeinen bei 10 bis 50, vorzugsweise 20 bis 40 liegt. Daneben können die Pastenharze, insbesondere falls sie selbsthärtend sein sollen, noch andere Isocyanatreste enthalten, die sich von gegebenenfalls kürzerkettigen, teilverkappten Poly-(Di)isocyanaten ($D_2$) ableiten, die unter den Härtungsbedigungen entkappen. Unter Urethanrest sei hier die Gruppierung

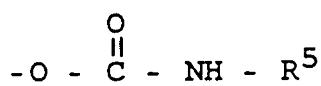

verstanden, in der $R^5$ einen Kohlenwasserstoffrest insbesondere aliphatischen oder araliphatischen Charakters mit 6 bis 50, vorzugsweise 10 bis 40 und insbesondere. 10 bis 30 C-Atomen, bedeutet, der gegebenenfalls durch Heteroatome (O, NH, NR) oder Gruppen wie

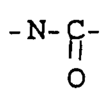

unterbrochen sein kann.

Im Falle der (teil)verkappten Polyisocyanate trägt $R^5$ noch ein bis fünf, vorzugsweise ein bis drei verkappte Isocyanatgruppen. Bei dieser Variante kann dann dieser Rest $R^5$ auch aromatisch sein und besitzt dann zumeist 6 bis 25, vorzugsweise 6 bis 15 C-Atome.

Die Herstellung der Pastenharze kann in der Weise erfolgen, daß man zunächst Polyamine (A) mit Verbindungen (B), die mindestens eine cycliche Carbonatgruppe (2-Oxo-1,3-dioxolangruppe) sowie gegebenenfalls OH-Gruppen, 1,2-Epoxidgruppen und Isocyanatgruppen enthalten, so umsetzt, daß dieses Umsetzungsprodukt (C) noch quaternierbare Aminogruppen aufweist, und dieses Umsetzungsprodukt (C), gegebenfalls nach vorheriger Reaktion mit monofunktionellen Isocyanaten (D1)/(D2), dann quaterniert.

Die C-Zahl der Polyamine (A) beträgt im allgemeinen 2 bis 40, vorzugsweise 2 bis 20.

Falls diese Polyamine gegenüber den Verbindungen (B) mehr als difunktionell sind und letztere mindestens zwei cyclische Carbonatgruppen enthalten, sind die Reaktionsbedinungen so zu wählen, daß keine Gelierung eintritt.

Als Polyamine (A) kommen vorzugsweise solche in Frage (A1) die mindestens eine freie primäre Aminogruppe enthalten und daneben noch zusätzlich sekundäre und/oder tertiäre Aminogruppen aufweisen (A1).

Polyamine (A1), die neben den primären Aminofunktionen noch sekundäre enthalten, können nach der Reaktion mit der Komponente (B) und, vor der Reaktion mit den Isocyanaten beispielsweise mit den weiter unten beschriebenen MonoExpoxidverbindungen (vorzugweise Ethylenoxid, Propylenoxid, 2-Ethylhexylglycidylether, Versaticsäureglycidylester) zu tertiären Gruppen umgesetzt werden; alternativ kann man sie auch mit den Isocyanaten zu Harnstoffstrukturen reagieren lassen.

Als Polyamine (A) sind beispielsweise auch solche geeignet, die nur primäre Aminogruppen enthalten und vorzugsweise diprimär sind (A2). Vorzugsweise werden diese Polyamine (A2) in Abmischung mit den Polyaminen (A1), insbesondere primär/tertiären Diaminen, eingesetzt. Letztere wirken bei der Reaktion mit einer mindestens difunktionellen Verbindung (B) als Kettenstopper.
Die Polyamine (A1)/(A2), können beispielsweise durch die nachstehende Formel (II) wiedergegeben werden

$$H_2N-(R_6\overset{R_7}{\overset{|}{N}})_p-R_7' \qquad (II),$$

in der

- p Null oder eine ganze Zahl von 1 bis 6 vorzugsweise 1 bis 4 ist,
- $R_6$ einen zweiwertigen, vorzugsweise nichtaromatischen Kohlenwasserstoffrest mit 2 bis 18 C-Atomen, vorzugsweise einen verzweigten oder unverzweigten Alkylenrest mit 2 bis 10 C-Atomen, insbesondere mit 2 bis 6 C-Atomen, oder einen Cycloalkylenrest mit 5 bis 12 C-Atomen, vorzugsweise 6 bis 10 C-Atomen, oder einen Aralkylenrest mit 7 bis 12 C-Atomen, vorzugsweise 8 bis 10 C-Atomen, oder einen Polyoxalkylenrest mit 2 bis 18 C-Atomen darstellt und
- $R_7$, $R_7'$ unabhängig voneinander für H oder

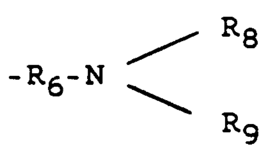

  stehen, worin $R_6$ die gleiche Bedeutung wie vorstehend hat und
- $R_8$, $R_9$ entweder unabhängig voneinander für H, $(C_1$-$C_{20})$Alkyl, vorzugsweise $(C_1$-$C_6)$Alkyl, Hydroxy$(C_1$-$C_{16})$Alkyl, vorzugsweise

$$-CH_2-\underset{OH}{\underset{|}{CH}}-R_{10}\,(R_{10}=H,\ (C_1\text{-}C_{12})Alkyl,\ -CH_2-O-(C_1\text{-}C_{12})Alkyl,$$

$$-CH_2-O-Aryl,\ CH_2-O-\underset{O}{\underset{\|}{C}}-(C_1\text{-}C_{12})Alkyl)$$

  oder

$$CH_2-\underset{R_{11}}{\underset{|}{CH}}-CN$$

  ($R_{11}$ = H oder $(C_1$-$C_6)$Alkyl), stehen oder
- $R_8$ und $R_9$ Teil eines 5-, 6- oder 7-gliedrigen aliphatischen Ringes sind, mit der Maßgabe, daß bei p gleich Null $R_{7'}$ nicht gleich H ist.

Weiterhin sind hier auch als Polyamine solche der Formel (III)

$A\text{-}(R_6NH)_p\text{-}R_6B$ (III)

geeignet, worin, A, B = $NH_2$ oder OH ist, wobei jedoch mindestens einer dieser beiden Reste für NH2 steht und $R_6$ sowie p die Bedeutung in Formel (II) haben.

Daneben sind beispielsweise auch die Polyamine und Polyaminopolyole geeignet wie sie in den Druckschriften DE-A- 36 44 371, DE-A- 37 26 497 und DE-A- 38 09 695 beschrieben sind. Auf diese Literaturstellen, einschließlich der darin beschriebenen bevorzugten Ausführungsformen, wird hiermit Bezug genommen, Weiterhin kommen auch Polyaminoamide oder Kondensationsprodukte von diprimären Aminen mit Dicarbonsäuren (wie Adipinsäure oder dimere Fettsäure) sowie Polyglycolpolyamine oder Amin-Addukte, wie Amin-Epoxidharz-Addukte in Betracht.

Beispiele für geeignete Polyamine (A) sind: Ethylendiamin, Propylendiamin, 2-Methylpentamethylendiamin, Pentanethylendiamin, Hexamethylendiamin, Trimethylhexamethylendiamin, Neopentyldiamin, Octamethylendiamin, Triacetondiamin, Dioxadecandiamin, Dioxadodecandiamin und höhere Homologe, cycloaliphatische Diamine wie 1,2-, 1,3- oder 1,4-Cyclohexandiamin; 4,4'-Methylen-bis-cyclohexylamin, 4,4-Isopropylen-bis-cyclohexylamin, Isophorondiamin, Tricyclododecenyldiamin, Menthandiamin, 4,4'-Diamino-3,3'-dimethyl-di-cyclohexylmethan, 3-Aminomethyl-1-(3-aminopropyl-1-methyl)-4-methylcyclohexan, N-Methylethylendiamin, N-Aminoethylpiperazin, 2-Aminoethylpiperazin, N,N-dimethylethylendiamin, -propylendiamin, N,N-Dimethylaminopropylamin, N,N-Bisaminopropyl-N′,N′-dimethylaminopropylamin, N,N-Dihydroxyethylethylendiamin, aromatische Amine wie m-Xylylendiamin, aliphatische Poly(Tri-, Tetra-)amine wie Diethylentriamin, Dipropylentriamin, Bishexamethylentriamin, Triethylentetramin, Tetraethylenpentamin, Pentaethylenhexamin, Methyliminobispropylamin, N-Alkylaminodipropylentriamine (Alkyl = $CH_3$-, $C_4H_5$-, $(CH_3)_2N\text{-}(CH_2)_3$)-,Tetrapropylenpentamin; ferner Alkanolamine wie Monoethanolamin, Diethanolamin, Aminoethylethanolamin, N-(2-hydroxypropyl)ethylendiamin, Mono-, Di-(n oder iso)propanolamin, Ethylenglycol-bis-propylamin, Neopentanolamin, Methylethanolamin, 2-(2-Aminoethoxy)-ethanol, Hydroxyethylaminoäthylamin, Hydroxyethyldiethylentriamin, 3-Amino-propyl-trialkoxysilan (alkoxy = methoxy-, ethoxy-, tridecycloxy-), 2-Amino-2-hydroxy-methyl-1,3-propandiol Polyoxypropylendiamin (vorzugsweise mit mittlerem Molgewicht von ca. 200 bis 400) aromatische Amine wie (m)-Xylylendiamin und dergleichen.

Bevorzugte Polyamine (A1), die wie auch die Polyamine (A2) in Mischung untereinander eingesetzt werden können, sind zum Beispiel: N,N-Bisaminopropyl-N-methylamin, N-Aminopropylmethylamin, -propylamin, Talgfettpropylendiamin und insbesondere Dimethylaminopropylamin sowie Diethylaminopropylamin.

Als Verbindungen (B) können beliebige Materialien eingesetzt werden, sofern sie im Mittel mindestens eine, vorzugsweise zwei oder drei cyclische Carbonat (2-Oxo-1,3-dioxolan)-Gruppen pro Molekül enthalten und keine anderen funktionellen Gruppen aufweisen, welche die Reaktion mit der Komponente (A) stören könnten. Das Molekulargewicht $\overline{M}_n$ (Zahlenmittel, bestimmt mit der Gelchromatographie, PS-Standard) sollte im allgemeinen zwischen 100 und 10 000, vorzugsweise zwischen 150 und 3500 liegen und das 2-Oxo-1,3-dioxolan-Äquivalentgewicht zwischen 100 und 1250. Die cyclischen Carbonat-Gruppen sind vorzugsweise endständig, jedoch können in manchen Fällen auch Verbindungen als Komponente (B) eingesetzt werden, welche diese Gruppen in statistischer Verteilung über die Molekülkette enthalten und die durch Copolymerisation unter Verwendung von olefinisch ungesättigten, diese cyclische Carbonat-Gruppen enthaltenden Verbindungen hergestellt werden können. Ein derartiges Herstellungsverfahren ist beispielsweise in DE-A-36 44 373 beschrieben.

Vorzugsweise besitzt die Komponente (B) die allgemeine Formel (IV)

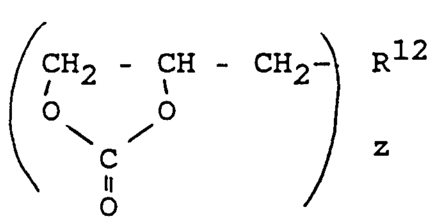

(IV)

in der bedeuten

$R^{12}$ = z-wertiger Rest eines Polyethers, Polyetherpolyols, Polyesters, Polyesterpolyols, der gegebenenfalls auch ($NR^{13}$)-Gruppen enthalten kann, wobei $R^{13}$ für Wasserstoff, Alkyl mit 1 bis 14, vorzugsweise 1 bis 8 C-Atomen oder Hydroxyalkyl mit 1 bis 14 , vorzugsweise 1 bis 8 C-Atomen steht, und diese Reste im allgemeinen mittlere Molekulargewichte $\overline{M}_n$ von 200 bis 5000, vorzugsweise 200 bis 2000 aufweisen, oder einen z-wertigen Kohlenwasserstoffrest, vorzugsweise Alkylenrest mit 2 bis 18 C-Atomen, der gegebenenfalls inerte oder nichtstörende Gruppen tragen kann, oder

einen z-wertigen Poly(sek.)aminrest oder

den z-wertigen Rest eines Umsetzungsproduktes einer Epoxy-Carbonat-Verbindung mit Polyaminen, Polyolen, Polycaprolactonpolyolen, OH-gruppenhaltigen Polyestern, Polyethern, Polyglykolen, hydroxy-, carboxyl- und aminofunktionellen Polymerölen mit mittleren Molekulargewichten $\overline{M}_n$ von 800 bis 10 000, Polycarbonsäuren, hydroxy- oder aminofunktionellen Polytetrahydrofuranen oder von Umsetzungsprodukten von Polyaminen mit Glycidylestern von $\alpha,\alpha$-Dialkylalkanmonocarbonsäuren der Summenformel $C_{12-14}H_{22-26}O_3$ oder mit Versaticsäureglycidylester, wobei diese Umsetzungsprodukte im allgemeinen mittlere Molekulargewichte $\overline{M}_n$ von 300 bis 12000, vorzugsweise 400 bis 5000 aufweisen,

z = 1 bis 5.

Der Index z steht in dieser Formel (IV) bevorzugt für 2 oder 3, insbesondere für 2.

Unter "Rest" im vorstehenden Sinne sei hier die jeweilige Verbindung (z.B. Polyether) abzüglich der aktiven H-Atome derjenigen Gruppen verstanden, die an die $CH_2$-Gruppe in Formel (IV) angrenzen.

Derartige Verbindungen und deren Herstellung sind beispielsweise in DE-A- 37 26 497 beschrieben, auf die hier Bezug genommen wird.

Bevorzugte Ausgangstoffe zur Herstellung der cyclischen Carbonate (IV) und der gegebenenfalls eingesetzten gemischten Epoxy-Carbonat-Verbindungen (V) sind die Polyglycidylether von Polyphenolen, z.B. Bisphenol A oder Bisphenol F. Die Glycidylether erhält man beispielsweise durch Umsetzung eines Polyphenols mit Epichlorhydrin. Polphenole sind beispielsweise Bis-(4-hydroxyphenyl)-2,2-propan, Bis(4-hydroxyphenyl)-methan, 4,4'-Dihydroxybenzophenon, Bis(4-hydroxyphenyl)-1,1'-ether, Bis(4-hydroxyphenyl)-1,1'-isobutan, Bis(2-hydroxynaphthyl)-methan, 1,5-Dihydroxynaphthalin. Vorzugsweise sind zusätzlich freie Hydroxylgruppen zu den Epoxydgruppen im Polyglycidylether des Polyphenols enthalten. Auch Diglycidyladdukte von (cyclischen) Harnstoffen sind hierfür einsetzbar.

Im manchen Fällen kann es zweckmäßig sein, als Komponente (B) zusätzlich oder gegebenenfalls alleine gemischte Epoxyd-Carbonate einzusetzen, wie solche der allgemeinen Formel (V)

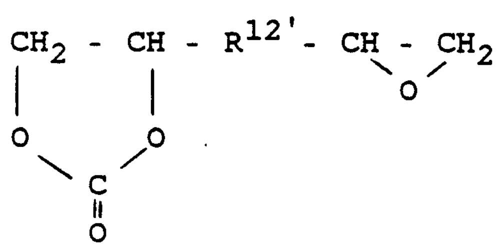

(V)

in der $R^{12'}$ die Bedeutung von $CH_2$-$R^{12}$-$CH_2$ hat.

Sofern die Verbindungen (B) OH-Gruppen enthalten, könnnen diese bereits in diesem Stadium teilweise oder vollständig mit den Isocyanaten (D1)/(D2) umgesetzt werden. Dies ist jedoch dann erforderlich, wenn das weiter unten beschriebene Addukt (C) noch freie, zur Quaternisierung vorgesehene primäre und/oder sekundäre Aminogruppen enthält, die ansonsten bevorzugt mit dem Isocyanat reagieren würden. Andernfalls, wenn also das Addukt (C) nur tertiäre oder verkappte primäre/sekundäre Aminogruppen enthält oder genügend tertiäre Aminogruppen für die Quaternisierung vorhanden sind, so daß die primären/sekundären Aminogruppen wegreagieren können, erfolgt die Reaktion mit den Isocyanaten (D1)/(D2) bevorzugt erst bei diesem Addukt (C).

Zur Herstellung dieses Adduktes (C) werden die Komponenten (A) und (B) in den erforderlichen stöchiometrischen Verhältnissen bzw. Mengen bei erhöhten Temperaturen, beispielsweise 50 bis 140 °C, vorzugsweise 50 bis 100 °C, und in Gegenwart gegebenenfalls von Katalysatoren und vorzugsweise inerten Lösungsmitteln umgesetzt. Die Umsetzung wird im allgemeinen so lange vorgenommen, bis z.B. eine konstante oder die theoretische Aminzahl erreicht ist. Dabei ist darauf zu achten, daß keine Gelierung eintritt. Bevorzugt werden die Komponenten (A) und (B) in solchen Mengen eingesetzt, daß 0,8 bis 1,5 Äquivalente primäre Aminogruppen auf 1 Äquivalent cyclische Carbonatgruppen kommen. Ein bevorzugtes Reaktionssystem hat beispielsweise folgende Zusammensetzung:

(A1): 28 - 80, vorzugsweise 40 - 70 Mol-%;

(A2): 0 - 40, vorzugsweise 0 - 30 Mol-%;
(B): 20 - 72, vorzugsweise 30 - 60 Mol-%.

(Die Angaben beziehen sich auf Festharze (C))

Während für die Umsetzung der primären Aminogruppen der Komponente (A) mit den 2-Oxo-1,3-dioxolan-Gruppen der Komponente (B) im allgemeinen kein Katalysator erforderlich ist, ist eine Katalyse für die Reaktion der reaktionsträgeren sek. Aminogruppen -sofern in der Komponente (A) vorhanden- zweckmäßig. Geeignete Katalysatoren hierfür sind stark basische Verbindungen, wie quartäre Ammoniumverbindungen, beispielsweose Alkyl-, Aryl-und/oder Benzylammoniumhydroxide und -carbonate. Spezielle Vertreter für quartäre Ammoniumverbindungen sind hierbei Alkylbenzyldimethylammoniumhydroxyd (Alkyl = $C_{16}$-$C_{22}$), Benzyltrimethylammoniumhydroxyd und Tetrabutylammoniumhydroxyd.

Bevorzugt sind als Katalysatoren stark basische Amine, beispielsweise Diazabicyclooctan (DABCO), Guanidin etc.

Weiterhin sind hier auch sogenannte supranukleophile Katalysatoren, z.B. 4-Pyrrolidinpyridin, Poly-(N,N-Dialkylaminopyridin) geeignet; vgl. hierzu Artikel von R.A. Vaidya et al. in Polymer Preprints, Bd. 2 (1986), S. 101-102.

Als Lösungsmittel für die obige Umsetzung kommen vorzugweise aprotische und gegebenfalls polare Lösungsmittel in Frage. Beispielsweise seien hier genannt: halogenierte Kohlenwasserstoffe (weniger geeignet bei Einsatz als Tauchlack), N-Methylpyrrolidon, Ether wie Diethylether, 1,2-Dimethoxyethan, Tetrahydrofuran oder Dimethyldiglykol, Dioxan; Ketone, wie beispielsweise Aceton, Methylethylketon, Methylisopropylketon, Methylisobutylketon, Cyclohexanon und ähnliche; Ester (weniger geeignet bei Einsatz als Tauchlack), wie Butylacetat, Ethylglykolacetat, Methoxypropylacetat; (cyclo)aliphatische und/oder aromatische Kohlenwasserstoffe, wie Hexan, Heptan, Cyclohexan, Benzol, Toluol, die verschiedenen Xylole sowie aromatische Lösemittel im Siedebereich von ca. 150 bis 180 °C (höhersiedende Mineralölfraktionen, wie ®Solvesso). Die Lösemittel können dabei einzeln oder im Gemisch eingesetzt werden.

Bei der stöchiometrischen Bewertung der Ausgangsprodukte und auch der Umsetzungprodukte bezüglich des Fortgangs der Umsetzung werden bei der Komponente (A) die Aminzahl, deren Ermittlung in üblicher Weise durch Perchlorsäuretitration erfolgen kann, und bei der Komponente (B) die Cyclocarbonat-Äquivalenzzahl, die in üblicher Weise durch Titration mit Kaliumhydroxidlösung bestimmt werden kann, zugrunde gelegt. Bezüglich weiterer Einzelheiten der Herstellung sei hier auf die bereits erwähnte DE-A- 37 26 497 sowie auf EP-A- 234 395 verwiesen.

Als Addukte (C) für die vorliegende Erfindung sind auch grundsätzlich die Verbindungen auf Basis von Umsetzungsprodukten von Aminen und cyclischen Carbonaten gemäß den vorstehend genannten Patentanmeldungen sowie der DE-A- 36 44 370 geeignet, sofern sie in den Molekulargewichtsbereich gemäß dieser Erfindung fallen und eine ausreichende Zahl von quaternierbaren Aminogruppen enthalten.

Die Umsetzung des Addukts (G) mit den Isocyanaten (D1)/(D2) geschieht unter den für derartige Reaktionen üblichen Bedingungen bei zwechmäßigerweise 30 bis 80 °C und in Gegenwart inerter, vorzugsweise aprotischer Lösungsmittel, beispielsweise den oben beschriebenen. Bei Erreichen eines % NCO-Gehaltes von < 0,2 wird die Reaktion abgebrochen.

Die maximale Zahl der eingesetzten Äquivalente Isocyanat richtet sich zweckmäßig nach folgende Kriterien:

| | |
|---|---|
| n(B) = | Hydroxylfunktionalität der Komponente (B) pro Mol; |
| n(A + B) = | Hydroxylfunktionalität, die entsprechend der Umsetzung (A) + (B) gebildet wird pro Mol (C); |
| n(D) = | Äquivalente Isocyanat (aus D1 und D2) pro Mol (C); |
| n(D) = | n(B) + n (A + B); |
| (D1) : | 0 - 4 Äquivalente/Mol Verbindung (C), vorzugsweise 1 - 2; |
| (D2) : | 0 - 4 Äquivalente/Mol Verbindung (C), vorzugsweise 0 - 2. |

Die langkettigen Monoisocyanate (D1), die den erfindungsgemäßen Verbindungen neben einer gewissen Flexibilität vor allem ein ausreichendes Maß an lyophilem Charakter, verleihen sollen, besitzen in der Regel 6 bis 22 C-Atome, vorzugsweise 10 bis 18 C-Atomen; ihr Kohlenwassertoffrest besitzt vorzugsweise aliphatischen oder araliphatischen Charakter. Beispiele hierfür sind Octadecylisocyanat, Dodecylisocyanat, Nonylphenylisocyanat etc.

Alternativ kommen hierfür auch teilverkappte, noch eine freie NCO-Gruppe aufweisende Polyisocyanate mit einer Gesamt-C-Zahl von 10 bis 50, vorzugsweise 20 bis 40 in Frage. Als Polyisocyanate, vorzugsweise Diisocyante, können beispielsweise die nachstehend bei (D2) aufgeführten Verwendung finden. Zur Verkappung sind entsprechend längerkettige Verbindungen geeignet die normalerweise bei der Härtung des

Lackfilms nicht abgespalten werden. Beispiele hierfür sind: Fettamine, wie Talgfettamin, Octadecylamin oder Dodecylamin, Nonylamin, Isononyloxypropylamin oder entsprechend abgeleitete Alkohole,, zum Beispiel Octadecylalkohol, Hexylglykol und ähnliche. Auch spezielle Polyetheralkohole, wie zum Beispiel die als Netzmittel bekannten ethoxylierten Octyl- bzw. Nonylphenole (z.B. ®Triton-X oder ®Arkopal N) können eingesetzt werden.

Falls die erfindungsgemäßen Pastenharze selbsthärtend sein sollen, können das Umsetzungsprodukt (C) oder bereits die Komponente (B) auch mit teilverkappten Isocyanaten (D2) umgesetzt werden, die auch kürzerkettig sein können und unter den Härtungsbedingungen entkappen.

Hierfür geeignete Polyisocyanate sind beliebige, auf dem Polyurethan- bzw. Lackgebiet bekannte Polyisocyanate, beispielsweise aliphatische, cycloaliphatische oder aromatische Polyisocyanate. Typische Beispiele für die derartige Polyisocyanate sind:
Xylylendiisocyanat. Diphenylmethan-4,4-diisocyanat, Triphenylmethyl-4.4′-triisocyanat. Triphenylmethantriisocyanat. Polyphenyl-polymethylisocyanat. 2.2.4(2.4.4)-methylcyclohexyldiisocyanat, Dicyclohexylmethyldiisocyanat, Diethylfumarhexylisocyanat. Bis-(3-Methyl-4-isocyanatocyclo-hexyl)-methan, 2,2-Bis-(4-isocyanatcyclohexyl)-propan, der Methylester des Lysindiisocyanats, das Biuret des Hexamethylendiisocyanats, Diisocyanate dimerer Säuren,1-Methyl-benzol-2,4,5-triisocyanat, Biphenyl-2,4,4′-triisocyanat, das Triisocyanat aus 3 Mol Hexamethylendiisocyanat und 1 Mol Wasser mit 16% NCO-Gehalt und weitere, wenigstens zwei NCO-Gruppen pro Molekül enthaltende Verbindungen, vorzugsweise Isophorondiisocyanat, Hexamethylendiisocyanat sowie Tri-und Tetramethylhexamethylendiisocyanat, insbesondere aber 2,4- oder 2,6-Toluylendiisocyanat oder Gemische dieser Verbindungen.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophonatgruppen, Isocyanuratgruppen, Urethangruppen, acylierte Harnstoffgruppen oder Biuretgruppen aufweisen.

Geeignete Polyisocyanate sind schließlich auch die bekannten, endständige Isocyanatgruppen enthaltenden Präpolymere, wie sie insbesondere durch Umsetzung der obengenannten einfachen Polyisocyanate, vor allem Diisocyanate mit überschüssigen Mengen an organischen Verbindungen mit mindestens zwei gegenüber Isocyanatgruppen reaktionsfähigen Gruppen zugänglich sind. Bevorzugt werden diese Präpolymeren allerdings als externe Härterkomponente bei den fremdvernetzenden Systemen eingesetzt.

Die Verkappungsmittel sollen so beschaffen sein, daß sie unter den üblichen Härtungstemperaturen von 130 bis 180 °C, gegebenenfalls in Gegenwart der hierfür bekannten Katalysatoren, wieder abspalten. Beispiele für derartige Verkappungsmittel sind:
aliphatische, cycloaliphatische oder alkylaromatische (einwertige) Alkohole z.B. niedere aliphatische Alkohole wie Methyl-, Äthylalkohol, die verschiedenen Propyl-, Butyl- und Hexylalkohole, Heptyl-, Octyl-, Nonyl-, Decylalkohol und ähnliche; Methoxy (1- bzw. 2-) propanol; ferner ungesättigte Alkohole wie Allylalkohol, Propargylalkohol, cycloaliphatische Alkohole wie Cyclopentanol, Cyclohexanol, alkylaromatische Alkohole wie Benzylalkohol, Methyl- sowie p-Methoxy- und p-Nitrobenzylalkohol und Monoäther von Glykolen, wie Ethylen-glykolmonoethyläther, -monobutyläther und ähnliche. Weitere Verkappungsmittel sind Ketoxime, zweckmäßigerweise mit 3 bis 20 C-Atomen, vorzugweise 3 bis 10 C-Atomen, wie Acetonoxim, Methylethylketonoxim (=Butanonoxium), Hexanonoxim (wie Methyl-Butylketonoxim), Heptanonoxim (wie Methyl-n-Amylketonoxim), Octanonoxim und Cyclohexanonoxim, CH-acide Verbindungen wie Malonsäurealkylester, Acetessigester sowie Cyanessigester mit jeweils 1 bis 4 C-Atomen in der Estergruppe, NH-acide Verbindungen wie Caprolactam, Aminoalkohole wie Diäthyläthanolamin und spezielle Amine, wie Dibutylamin. Bevorzugt sind hierbei 2-Ethylhexanol, Butyldiglykol, Butylglykol und 3-Methyl-3-methoxybutanol.

Beispiele für geeignete Entkappungs- Katalysatoren sind Bleieoctoat, Bleisilikat, Bleinaphthenat, Zinkverbindungen gemäß den DE-Offenlegungsschriften 28 07 698 und 33 06 064, Zink- und Zink-Blei-Verbindungen der Nitrophthalsäure, Komplexverbindungen aus Zinkoxid und 8-Hydroxychinolin (auch "in situ" anwendbar), Antimontrioxid, Mangan(II und III)acetylacetonat, Manganphosphat, Mangan-Zinkphosphate, Kobaltnaphthenat, Cadmium-acetyl-acetonat, Thallium-dicyclopentadien, Triethanolamin-titanat oder organische Verbindungen des Zinns, zum Beispiel Dibutylzinndilaurat und bevorzugt Dibutylzinnoxid.

Zur Quaternierung der so erhaltenen, Urethangruppen aufweisenden Produkte (C) können grundsätzlich alle hierbei bekannten Methoden eingesetzt werden, wie sie beispielsweise in DE-A- 26 41 286 beschrieben sind. Durch die Art des eingeführten Gegenions können sich jedoch hierbei Beschränkungen ergeben. So können Quaternierungsverfahren für erfindungsgemäße Pastenharze, die bei Elektrotauchlacken verwendet werden sollen, dann nicht eingesetzt werden, wenn sie Halogenanionen einführen, da diese zu starker Anodenkorrosion führen. Dies ist beispielsweise bei der Quaternierung mit Alkylhalogeniden (jodiden), nicht jedoch mit Dialkylsulfaten oder Trialkylphosphaten der Fall.

Bevorzugt erfolgt diese Quaternierung durch Umsatz von (C) mit Monoepoxid-Verbindungen, wie z.B. Ethylenoxid, Propylenoxid, 2-Ethylhexylglycidylether, Versaticsäureglycidylester, Glyidyl-Phthalimid, Phenyl-Glycidylether, Methylglycidylether, Phenol-$(EQ)_5$-Glycidylether in Gegenwart von vorzugsweise organischen Säuren und vorzugsweise 0,5 bis 20 Mol $H_2O$ Mol/Aminogruppe (vgl. hierzu auch Houben-Weyl, Bd. XI/2, S. 609 ff (1958)).

Die eingesetzten Säuren besitzen einen $pK_a$-Wert von ≦ 6 und sind zweckmäßigerweise gut Wasser mischbar. Beispiel hierfür sind anorganische Säuren wie Phophorsäure; bevorzugt handelt es sich hierbei jedoch um organische Säuren, wie Ameisensäure, Essigsäure und besonders bevorzugt Milchsäure. Es ist beispielsweise auch möglich, die Umsetzung von (C) mit der Monoepoxidverbindung zunächst im Neutralen durchzuführen und erst anschließend die Säure zuzufügen.

Die Quaternierung wird im allgemeinen bei Temperaturen von 20 bis 100 °C, vorzugsweise 50 bis 100 °C durchgeführt, vorteilhafterweise in Anwesenheit eines organischen Lösungsmittels. In einer bevorzugten Ausführungsform wird dabei beispielsweise zu einer Mischung aus Umsetzungsprodukt (C) und Monoepoxid-Verbindung (1 Mol pro Mol tertiäre Aminogruppen oder 2 Mol pro Mol sekundäre Aminogruppen) langsam ein Gemisch von 1 Mol Milchsäure/Mol zu quaternierender Aminogruppe und 0,5 bis 20, vorzugsweise 2 bis 10 Mol E-Wasser/Mol zu quaternierender Aminogruppe in einem protischen Lösungsmittel, vorzugsweise Butylglykol, Methoxypropanol und/oder Ethoxypropanol eingebracht. Die Reaktion wird bis zu einer Säurezahl von <10 geführt.

Im Falle leicht flüchtiger Epoxidverbindungen wird zuerst mit dem Gemisch aus Milchsäure, Wasser und Lösungsmittel versetzt und anschließend unter gelegentlichem Kühlen die Epoxidverbindung (Ethylenoxid, Propylenoxid etc.) eingeleitet (drucksichere Apparatur).

Die so quaternierten Verbindungen eignen sich ausgezeichnet als Pastenharze für Pigmentpasten bzw. Pigmentdispersionen, wobei -je nach Art des Pigmentes, dessen Primärkorngröße etc.- Pigment: Pastenharz-Verhältnisse von 1:1 bis 40:1, vorzugsweise 12:1 bis 20:1 möglich sind. Neben dem erfindungsgemäßen Pastenharz und dem Pigment kann diese Pigmentpaste noch die üblichen Additive, wie Füllstoffe, sonstige lacklübliche Hilfsstoffe (Dipergierhilfsmittel, Netzmittel, Lösemittel, Weichmacher, Entschäumer etc.) sowie gegebenenfalls einen Teil oder die Gesamtmenge der bekannten Härtungskatalysatoren enthalten.

Als Pigmente kommen die hierfür üblichen in Frage, wie zum Beispiel: Titanoxid (in der Regel als Hauptbestandteil), andere Weißpigmente bzw. Extender, wie Antimonoxid, Zinkoxid, basisches Blei-Carbonat bzw. -Silicat und/oder -Sulfat, Bariumcarbonat, Ton, Calciumcarbonat, Aluminiumsilicat, Kieselerde, Magnesium-Carbonat- und/oder -Silicat; außerdem (zusätzliche) Farbpigmente wie Phthaloxyaninblau, hydratisierte Eisenoxide, Chromgelb, Ruß, Toluidinrot, Braunstein.

Der Wassergehalt solcher Pigment-Pasten richtet sich nach der für die Verarbeitung gewünschten Viskosität und liegt vorzugsweise zwischen 10 und 50 %. Gegebenenfalls kann die Pigment-Paste auch vor dem Einsatz weiter verdünnt werden.

Die Herstellung derartiger Pigment-Pasten erfolgt in bekannter Weise, wie etwa in DE-A 37 26 497 oder in DE-A-26 34 229 beschrieben.

Die Zerkleinerung des Pigmentes geschieht in der Regel in Kugelmühlen, Sandmühlen, Cowles-Auflösern oder kontinuierlichen Zerreibungseinrichtungen, bis das Pigment auf die gewünschte Teilchengröße zerkleinert worden und durch das Trägerharz benetzt oder in ihm dispergiert worden ist. Nach der Zerkleinerung sollte die Teilchengröße des Pigments im Bereich von 10 Micrometer oder kleiner, vorzugsweise so klein wie möglich sein. Im allgemeinen wird das Pigment auf eine Feinheit von kleiner 3 µm (gemessen mit Laser-Aerosolspektroskopie) zerkleinert, vorzugsweise in Gegenwart von Glas-Perlen, $Al_2O_3$-(Korund)-Perlen oder Keramik- bzw. $ZrO_2$-Perlen (⌀ 0.5 - 3 mm).

Vorstehende Pigment-Dispersionen (-Pasten) werden dann in üblicher Weise und ausreichender Menge dem wasserverdünnbaren Lack, insbesondere Elektrotauchlack, zugemischt. Im allgemeinen hat die fertige, elektrisch abscheidbare Zusammensetzung ein Verhältnis von Pigment zu Bindemittel ( = elektrisch abscheidbares Harz plus Pastenharz) von 0,05:1 bis 0,8:1.

Als filmbildende Harze in diesen Lacken kommen die hierfür bekannten Produkte in Frage, wie sie beispielsweise in DE-A- 36 44 371, DE-A- 37 26 497.4 und DE-A- 38 09 655 sowie in EP-A- 234 395 beschrieben sind. Weitere hierfür geeignete Harze sind im Journal of Coatings Technology, Vol. 54, No. 686, (1982), S. 33 bis 41 ("Polymer Compositions for Cationic Electodepositable Coatings") offenbart, worauf gleichfalls Bezug genommen wird.

Die elektrische Ablagerung der Lackteilchen aus den Elektrotauchlacken erfolgt nach bekannten Verfahren, auf die hier verwiesen wird. Die Abscheidung kann auf allen elektrisch leitenden Substraten erfolgen, z.B. Metall wie Stahl, Kupfer, Aluminium und dergleichen.

Nach der Abscheidung wird der Überzug bei erhöhten Temperaturen, die im allgemeinen von der Beschaffenheit der Härterkomponente abhängig sind, durch übliche Verfahren gehärtet, wobei Temperaturen von 100 bis 220 °C vorzugsweise 130 bis 180 °C verwendet werden.

Die erhaltenen Überzüge zeichnen sich insbesondere durch hervorragende Salzsprühbelastbarkeit (ASTM-B-117-64; 960 Stunden auf zinkphosphatiertem und blankem Eisenblech) aus. Die erfindungsgemäßen Pastenharze liefern beim Einbrennen aufgrund der Umwandlung von quaternärer Ammoniumstruktur in tertiäres Amin keine Spaltprodukte, die zum Kettenabbruch führen. Mit dieser Umwandlung ist auch eine Veringerung der Polarität des Lackfilms und damit eine Erhöhung der Wasserbeständigkeit verbunden.

**Beispiele:**

Alle Mengenangaben sind in Gewichtsteilen.

Der Siebrückstand und die "L-Blechbeschichtung" wurden folgendermaßen bestimmt bzw. durchgeführt:

Siebrückstand:

1 l der verdünnten Lacklösung wird durch ein gewogenes Perlonsieb (Maschenweite 30 µm) gegossen. Das Sieb wird mit deionisiertem Wasser nachgespült und nach Trocknung (1 h/125 °C) gewogen. Das Ergebnis wird in mg Rückstand angegeben (auf 1000 ml Bad bezogen).

"L-Blech-Beschichtung"

Ein zinkphosphatiertes Stahlblech (zirka 10 x 20 cm) wird am unteren Ende rechtwinklig gebogen (3 cm waagrechte Fläche). Das Blech wird im Beschichtungsbad so eingehängt, daß der waagrechte Schenkel des L etwa 15 cm unter der Oberfläche des Lackbades ist. Die Beschichtung erfolgt bei abgestellter Rührung und mit einer Beschichtungsdauer von 4 min. Nach Ende der Beschichtung verbleibt das Blech noch 2 min. im Bad. Anschließend wird das Blech aus dem Bad genommen, nach weiteren 2 min. mit Wasser gespült und eingebrannt. Das Blech wird visuell hinsichtlich Verlauf, Glanz und Sedimentationserscheinungen beurteilt.

I. Herstellung des erfindungsgemäßen Pastenharzes

**1.) Teilverkapptes Polyisocyanat (D2)**

Zu 174 T Toluylendiisocyanat (2 Äquiv. NCO, 80 % 2,5-, 20 % 2,6-Isomeres) wurden bei 25 bis 40 °C in Gegenwart von 0,01 % Triethylamin als Katalysator, 124 T (1,05 Äquiv. OH) Butylglykol langsam einlaufen gelassen und bis zu einem NCO-Wert ca. 13,5 bis 14,0 % umgesetzt.

**2.) Aufbau der Verbindung (C):**

2.1.) Zu 1048 T eines Biscarbonates auf Basis ®Epicote 1001 (1 mol, 2 Äquiv. Carbonat) in 537 T N-Methylpyrrolidon wurden während einer Stunde 204 T N-N-Dimethylaminopropylamin (2 mol, 2 Äquiv. primäres Amin) bei ca. 60 °C einlaufen gelassen. Anschließend wurde die Reaktionsmischung für ca. 3 bis 5 Stunden auf dieser Temperatur gehalten (Aminzahl ca. 94/Bindemittel fest). Die 70%ige Harzmischung konnte anschließend weiter verarbeitet werden.

2.2) Zu 920 T eines Biscarbonates auf Basis von ®Epicote 828 (2 mol, 4 Äquiv. Carbonat) in 557 T N-Methylpyrrolidon wurde während einer Stunde eine Mischung, bestehend aus 204 T N,N-Dimethylaminopropylamin (2 mol,2 Äquiv. primäres Amin) und 176 T 4,7-Dioxadecan- 1,10-diamin (1 mol, 2 Äquiv. primäres Amin), bei ca. 60 °C einlaufen gelassen. Anschließend wurde die Reaktionsmischung für ca. 3 bis 5 Stunden auf dieser Temperatur gehalten (Aminzahl ca. 90/Bindemittel fest). Die 70%ige Harzmischung konnte anschließend weiter verarbeitet werden.

**3.) Umsatz der Verbindung (C) mit Isocyanat (D1)/(D2)**

Gemäß nachstehender Tabelle 1 wurde zu den vorstehend unter 2.) erhaltenen Reaktionsmischungen während einer Stunde x T Octadecylisocyanat (D1) und y T teilverkapptes Isocyanat (D2) gemäß Beispiel 1) bei 60 bis 70 °C einlaufen gelassen. Anschließend wurde der Reaktionsansatz bei dieser Temperatur

gehalten, bis ein NCO-Wert von praktisch 0 % erreicht war.

Tabelle 1

| Beispiel | 3.1 | 3.2 | 3.3 |
|---|---|---|---|
| Ausgangsverbindung entsprechend Beispiel: | 2.1. | 2.1. | 2.1. |
| x T Octadecylisocyanat | 590 | 590 | 590 |
| (mol/Äquiv. NCO) | (2/2) | (2/2) | (2/2) |
| y T Isocyanat gemäß Bsp. 1 | - | 596 | 596 |
| (mol/Äquiv. NCO) | - | (2/1,9) | (2/1,9) |
| Aminzahl (Bdm-fest) | 62 | 47 | 45 |
| Festkörper (in %; 1 h, 125 °C) | 78 | 82 | 82 |
| nA | 2 - 2,5 | 2 - 2,5 | - |
| n(A + B) | 2 | 2 | 4 |

#### 4.) Quaternierung

Die unter 3.) erhaltenen Bindemittelvorstufen (Mengenangaben siehe nachstehende Tabelle 2) wurden in einem auf mindestens 10 bar Überdruck ausgelegten Reaktionsgefääß unter Stickstoff vorgelegt. Anschließend wurde bei 50 °C unter gelegentlichem Kühlen eine Mischung bestehend aus 102, 2 T Milchsäure/90%ig (2 Mol), 26 T E-Wasser (in Summe 2 Mol) und x T Butylglykol während 20 min einlaufen gelassen. Zu dieser gut homogenisierten Mischung wurden mit Stickstoff 10 T Ethylenoxid (0,228 mol) eingeleitet. Dabei stieg die Temperatur an. Durch gelegentliches Kühlen wurde sie bei 100 bis 120 °C gehalten. Anschließend wurde auf 70 bis 80 °C gekühlt und während 2 Stunden die restliche Menge an Ethylenoxid (ca. 166 T; 3,772 Mol) eingeleitet.

Die Reaktion war beim Erreichen einer Säurezahl im Bereich von 10 bis praktisch Null (ca. weitere 2 bis 4 Stunden) beendet. Dann wurde überschüssiges Ethylenoxyd abdestilliert, anschließend mit y T E-Wasser auf Festkörper eingestellt und der Ansatz abgekühlt.

Tabelle 2

| Beispiel | 4.1 | 4.2 | 4.3 |
|---|---|---|---|
| Ausgangsverbindung entsprechend Beispiel: | 3.1. | 3.2. | 3.3. |
| Einwaage in T | 2379 | 2975 | 2943 |
| T Butylglykol | 107 | 306 | 268 |
| T E-Wasser* | 56 | 112 | 208 |
| Festkörper (in %; 1 h, 125 °C) | 70 | 70 | 70 |
| Viskosität (DIN 53 019) mpa.s bei 100 $s^{-1}$, 20 °C | 310 | 280 | 320 |
| | keine Thioxotropie | | |

*E-Wasser = vollentsaltzes Wasser

Alle Bindemittel waren unbegrenzt wassermischbar.

#### 5. Vergleichsversuch:

Für den Vergleichsversuch wurde ein Pigmentpastenharz, welches in seinem Aufbau in der EP-Offenlegungsschrift 107 098 (Beispiel II) beschrieben ist, synthetisiert.

Zu 420 T (2 Äquivalente) Kokosfettsäure wurden bei Raumtemperatur während einer 1/2 Stunde 235 T (2,3 Äquivalente) Dimethylaminopropylamin einlaufen gelassen. Dabei stieg die Temperatur auf ca. 70 °C an. Die Reaktionsmischung wurde anschließend bei 135 bis 140 °C für ca. 2 Stunden Rückfluß gekocht.

Anschließend wurde über einen Wasserabscheider Reaktionswasser abdestilliert und im Anschluß daran im Vakuum von überschüssigem Amin befreit. Das Reaktionsprodukt wurde dann auf Raumtemperatur

abgekühlt, mit 237 T Butylglykol verdünnt, gut homogenisiert, dann mit 218 T Milchsäure (90%ig, 2,18 Äquivalente) versetzt. Dabei stieg die Temperatur auf ca. 60 °C an und wurde dort für ca. 15 min. gehalten. Anschließend wurde mit 208 T vollentsalztem Wasser versetzt, bei 60 °C für 15 min. gut homogenisiert, und dann wurden rasch 439 T (2,34 Äquivalente) Epikote 828 zugegeben. Die Reaktionsmischung wurde dann auf 75 bis 85 °C erwärmt und für 2 Stunden bei dieser Temperatur gehalten. Das Produkt hatte eine Säurezahl von ca. 10 mg KOH/g Festharz und einen Festkörpergehalt (1h, 125 °C) von ca. 62 %. Das Bindemittel war unbegrenzt wassermischbar.

**6. Prüfung der erfindungsgemäß hergestellten Bindemittel als Pigmentpastenharze:**

a) Aus den Bindemitteln entsprechend den Beispielen 4.1, 4.2., 4.3. und dem Vergleichsversuch 5 wurden gemäß der nachstehenden Formulierung Pigmentpasten nach üblichen Standardprüfrezepturen hergestellt.

| **Pigmentzusammensetzung (inkl. Additive):** | | |
|---|---|---|
| A | | B |
| 3,550 | a)®Surfynol 104/50%ig in Butylglykol | 3,550 |
| 10,542 | b) basische Bleisilikatpaste/75%ig in E-Wasser (EP 202) | 10,542 |
| 1,692 | c)®Printex 25 (Farbruß) | 1,480 |
| 5,086 | Dibutylzinnoxid | 14,834 |
| 79,130 | d)Titanoxid RSE 50 | 69,594 |

a) Air Products and Chemicals Inc. (USA)
b) Fa. Heubach
c) Fa. Degussa AG
d) Fa. Bayer AG

| Pigmentpaste: | | | | |
|---|---|---|---|---|
| Beispiel | Pastenharz gemäß | Pigmentzusammensetzung. | PBV | Festkörper (1h, 125 °C) |
| 6.1. | 4.1. | A | 12:1 | 70 % |
| 6.2. | 4.2 | A | 12:1 | 70 % |
| 6.3. | 4.3 | A | 12:1 | 68 % |
| 6.4. | 5 (Vergl.) | A | 12:1 | 80 % |
| 6.5. | 5 (Vergl.) | B | 35:1 | 70 % |

Die Pastenharze wurden gemäß obiger Rezeptur, in der dem Fachmann bekannten Art und Weise auf einer Perlenmühle (s. a. DE-Patentanmeldung P 3 726 497.4) angerieben und anschließend mit E-Wasser auf Festkörper eingestellt, um eine entsprechende Handbarkeit zu gewährleisten.

Alle Pasten besaßen praktisch kein Thixotropierverhalten und hatten Viskositäten bei D = 50 $s^{-1}$ von 300 bis 450 mPa.s und bei D = 100 $s^{-1}$ von 150 bis 250 mPa.s. Die Pasten zeigten auch bei Lagerung (4 Wochen, Raumtemperatur) keine nennenswerte Viskositätsveränderung bzw. Pigmentantrocknungen.

b) Die Pasten wurden dann einem verdünnten Klarlack (20%ige wäßrige Lösung) der nachfolgend unter II beschriebenen K-ETL-Bindemittel-Dispersionen unter Rühren zugesetzt und anschließend mit E-Wasser auf 18 % Festkörper (1 h, 125 °C) eingestellt. Anschließend wurde nach 24 Stunden, 14 Tagen und 4 Wochen (Rühren bei Raumtemperatur) der Siebrückstand bestimmt und eine "L-Blech-Beschichtung" durchgeführt.

Die Zusammensetzung der Prüflacke und die resultierenden Ergebnisse sind in der weiter unten folgenden Tabelle 4 zusammengefaßt.

**II. Bereitung der Bindemittel-Dispersionen (KTL-Lacke)**

1. Aufbau des Härters (analog DE-Patentanmeldung P 38 09 695.1)

Zu 129,3 T (0,55 Mol) DETA(EO)$_3$ [DETA(EO)$_3$ = dreifach ethoxyliertes Diethylentriamin wie in vorstehender Patentanmeldung beschrieben] in 116,80 T N-Methylpyrrolidon wurden während 30 min bei 60 °C 102,3 T (0,55 Mol) ®Beckopox-080 (2-Ethylhexylglycidylether) zugegeben. Die Temperatur stieg bis 80 °C an, und die Reaktionsmischung wurde dann bis zum Erreichen einer Epoxidzahl von ~0 bei 100 °C gehalten (~3 Stunden). Anschließend wurde mit 449 T Toluol verdünnt und auf 60 °C gekühlt. In diese Mischung wurden dann während 30 min 819,5 T (2,75 Mol) des teilverkappten Polyisocyanats gemäß I 1.) einlaufen gelassen und anschließend während 4 Stunden bei 70 °C bis zu einem % NCO-Wert von 0,15 umgesetzt.
Die Aminzahl des erhaltenen Härters lag bei ca. 57,5 mg KOH/g.
Festkörper (1 h, 125 °C): 65 %

2. Herstellung der Bindemittel

2.1. In Anlehnung an Beispiel VIII/26 der DE-Offenlegungsschrift 36 24 454 wurde eine Bindemittellösung folgendermaßen hergestellt

832 T des Monocarbonates von ®Epicote 828 (Diglycidylether von Bisphenol A; 2 Äquiv. Epoxid), 830 T ®Capa 205 (= Polycaprolactondiol mit mittl. Molmasse von 830) und 712 T Toluol wurden gemischt und bei 70 bis 140 °C in Gegenwart von ca. 0,3 % Bortrifluordietherat zur Reaktion gebracht bis eine Epoxidzahl von ca. 0 erreicht wurde. Anschließend wurden 1497 T des Biscarbonates von ®Epicote 1001 (2 Äquivalente Carbonat, 70%ig in Toluol als Suspension) zugesetzt, gut homogenisiert und bei 60 bis 80 °C während 2 Stunden 1192 T der Verbindung gemäß Beispiel I.1 einlaufen gelassen. Anschließend wurde bis zum Erreichen von ca. 0 % NCO auf 80 °C gehalten.

Die Reaktionsmischung wurde dann auf ca. 40 °C gekühlt, mit 645 T Bishexamethylentriamin versetzt und bei 30 bis 40 °C während 2 bis 3 Stunden nochmals 596 T der Verbindung I.1. zugegeben und anschließend bei 40 °C bis zu einem % NCO-Wert von ≦ 0,1 % abreagieren gelassen.

Die so erhaltenen Bindemittelmischung wurde mit 1490 T Methoxypropanol auf 66 % Festkörper eingestellt, auf ca. 70 °C erwärmt und bis zum Erreichen einer Aminzahl von ca. 33 (bezogen auf Bindemittel fest) gehalten. Anschließend wurde mit 142 T Ameisensäure (50%ig) auf einen MEQ-Wert von ca. 30 teilneutralisiert (Festkörper 65%ig, 1 Stunde, 125 °C).

2.2. Analog der EP-Offenlegungsschrift 12463 und der DE-Offenlegungschrift 36 15810 wurden:

301 T Diethanolamin, 189 T N-N-Dimethylaminopropylamin und 1147 T eines Adduktes aus 2 mol 2-Methylpentamethylendiamin und 4 Mol Glycidylester der Versaticsäure (Cardura® E 10 von Shell) zu 5273 T Bisphenol-A-Epoxidharz (Epoxidäquivalentgewicht 475) in 3000 T Ethoxypropanol gegeben. Das Reaktionsgemisch wurde 4 Stunden unter Rühren bei 60 bis 90 °C und dann eine Stunde bei 120 °C gehalten. Anschließend wurde mit Ethoxypropanol auf 65 % Festkörper verdünnt (~720 g).

| | |
|---|---|
| Hydroxylzahl | 276 mg KOH/g Festharz |
| Hydroxylzahl (primäres OH) | 55 mg KOH/g Festharz |
| Hydrierjodzahl | praktisch Null |
| Aminzahl (tertiäre Aminogruppen) | 78 mg KOH/g Festharz |

3. Herstellung der Lacke:

Gemäß nachstehender Rezeptur wurden aus den in II 2. beschriebenen Bindemitteln folgende Dispersionen erstellt (40 %ig; 1 h, 125 °C):

Tabelle 3

| Dispersion I | Dispersion II |
|---|---|
| 588 T Bindemittel 2.1. (65%ig in Toluol/Methoxypropanol)<br>588 T Bindemittel 2.2. (65%ig in Ethoxypropanol)<br>363 T Härter 1. (65%ig in NMP/Toluol)<br>20 T Butyldiglykol<br>17,06 T Ameisensäure, 50%ig<br>1381 T E-Wasser | 1032 T Bindemittel 2.2. (65%ig in Ethoxypropanol)<br>506 T Härter 1. (65%ig in NMP/Toluol)<br>20 T Butyldiglykol<br>32,2 T Ameisensäure/50%ig<br>1389 T E-Wasser |
| NMP = N-Methylpyrrolidon | |

Die Bindemittel, der Härter, das Butyldiglykol und die Ameisensäure wurden vorgelegt, gut homogenisiert und dann durch Vakuumdestillation bei Temperaturen von 40 bis 80 °C (Manteltemperatur) und Drucken bis minimal 0,02 bar in 50 min. 457 g (I) bzw. 463 g (II) Lösemittel abgezogen. Um ein Schäumen zu vermeiden, wurde dabei der Druck nur entsprechend langsam vermindert. Nach Abschluß der Destillation wurde belüftet und mit 60 °C warmen E-Wasser auf 40 Gew.-% Festkörpergehalt (bestimmt bei 125 °C/1 h) unter gutem Rühren dispergiert. Die so erhaltenen dünnflüssigen Dispersionen wurden beo 40 °C über einen 25 µm GAF-Filter filtriert. Die MEQ-Werte lagen bei ca. 30 (I) bzw. 35 (II).

Die Prüfkombination 1 bis 10 wurde der kataphoretischen Abscheidung in einem offenen Glasgefäß unterworfen. Als Kathode dienten die angeführten Untergründe und als Anode, im Abstand von 5 bis 10 cm von der Kathode, blankes Stahlblech. Die Badtemperatur lag bei 28 °C, die Abscheidedauer betrug 2 min.

Die Oberflächenbeurteilungen erfolgten an den gehärteten Filmen (Einbrennbedingungen: 20 min, Objekttemperatur von 180 °C) mit einer Sollschichtstärke von 20 µm auf B 1. Die Ergebnisse sind in der nachstehenden Tabelle 4 zusammengefaßt:

**Tabelle 4:**

| Prüfkombination | Klarlack-Dispersion | Pigmentpaste | PBV-Lack | Siebrückstand nach | | | "L-Blech" nach | | | Beschichtung auf | | | |
|---|---|---|---|---|---|---|---|---|---|---|---|---|---|
| | | | | 24h | 14d | 4wo | 24h | 14d | 4wo | A1 | B1 | B2 | B3 |
| 1 | I | 6.1. | 0,4 : 1 | 10 | 30 | 80 | i.O. | i.O. | i.O. | i.O. | i.O. | i.O. | i.O. |
| 2 | I | 6.2. | 0,4 : 1 | 10 | 25 | 60 | i.O. | i.O. | LM | i.O. | i.O. | i.O. | i.O. |
| 3 | I | 6.3. | 0,4 : 1 | 20 | 40 | 100 | i.O. | i.O. | M | M | i.O. | M | P |
| 4 | I | 6.4. (Vergleich) | 0,4 : 1 | 5 | 30 | 180 | i.O. | LM | M | M, P | i.O. | i.O. | D |
| 5 | I | 6.5. | 0,4 : 1 | 80 | 150 | 200 | i.O. | n.i.O. | n.i.O. | A, U, | P | i.O. | A,F |
| 6 | II | 6.1. | 0,4 : 1 | 20 | 20 | 50 | i.O. | i.O. | i.O. | i.O. | i.O. | i.O. | i.O. |
| 7 | II | 6.2. | 0,4 : 1 | 30 | 30 | 40 | i.O. | i.O. | i.O. | i.O. | i.O. | i.O. | i.O. |
| 8 | II | 6.3. | 0,4 : 1 | 30 | 50 | 50 | i.O. | LM | S | M | i.O. | i.O. | M |
| 9 | II | 6.4. (Vergleich) | 0,4 : 1 | 20 | 20 | 140 | i.O. | i.O. | LM | P, U | i.O. | P | P |
| 10 | II | 6.5. | 0,4 : 1 | 50 | 100 | 250 | LM | S | n.i.O. | A, P | i.O. | P | P,F |

Die Abkürzungen in der Tabelle 4 haben folgende Bedeutung:

| | |
|---|---|
| i.O. | Beschichtung in Ordnung, keine Sedimentationserscheinung |
| LM | leichte Mattierung |
| M | Film matt, noch keine Verlaufstörungen |
| S | deutliche Sedimentationserscheinungen |
| n. i. O. | Film unbrauchbar |
| Al | Aluminium |
| B1 | ®Bonder 132 |
| B2 | ®Bonder 26 |
| B3 | ®Bonder 26 - verzinkt |
| PBV | Pigment/Bindemittel-Verhältnis |
| P | Pieken |
| K | Krater |
| D | Dellen |
| U | Überbeschichtung |
| A | Aufbruchartige Beschichtung |
| F | Kantenflucht |

(B1, B2, B3: Oberflächen behandeltes Blech)

Die Beschichtung auf den verschiedenen Untergründen (Al, B1), B2, B3) erfolgten unter gleichen Abscheidebedingungen und dürfen keine Unterschiede (Δ ≧ 2 µm) in der Schichtsärke (~20 µm) aufweisen. Auch müssen Verlauf, Kantenabdeckung und Mattierung des Films in Ordnung sein.

Aus dieser Tabelle 4 folgt, daß die erfindungsgemäßen Pigmentpasten, den gestellten Anforderungen hinsichtlich Stabilität und Beschichtungsverhalten gerecht werden. Bei den Vergleichspasten (vorallem 6.5) zeigt sich, daß sie ungünstiger im Siebrückstand und L-Blech sind und die hohen Pigment-Bindemittelverhältnisse dem eher noch abträglich sind (PBV ~ 35:1).

## Patentansprüche

1. Pigmentpaste enthaltend ein Pigment und ein Pastenharz, dadurch gekennzeichnet, daß das Pastenharz enthält (a) quaternäre Ammoniumgruppen, (b) OH-Gruppen, (c) Urethanreste und (d) Gruppen der Formel (I)

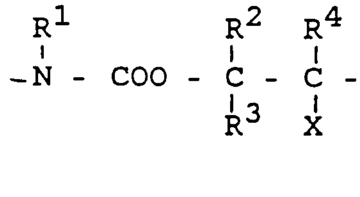

(I),

in der $R^1$ bis $R^4$ unabhängig voneinander für Wasserstoff oder einen Kohlenwasserstoffrest mit 1 bis 10 C-Atomen stehen und X Hydroxyl oder einen Urethanrest bedeutet, wobei das mittlere Molekulargewicht ($\overline{M}n$) dieser Pastenharze 500 bis 10000 beträgt und wobei das Verhältnis Pigment: Pastenharz größer als 2:1 ist.

**2.** Pigmentpaste nach Anspruch 1, dadurch gekennzeichnet, daß das Pastenharz pro Molekül im Mittel 1 bis 4 der Gruppen (a) und 1 bis 6 der Gruppen (d) enthält.

**3.** Pigmentpaste nach Anspruch 1 und/oder 2, dadurch gekennzeichnet, daß die Zahl der Gruppen (b) im Pastenharz im Mittel 1 bis 20 pro Molekül beträgt.

**4.** Pigmentpaste nach mindestens einem der Ansprüche 1 bis 3, dadurch gekennzeichnet, daß die Zahl der Gruppen (c) im Pastenharz bei 1 bis 6 pro Molekül liegt.

**5.** Pigmentpaste nach mindestens einem der Ansprüche 1 bis 4, dadurch gekennzeichnet, daß sich die Urethanreste (c) und X in Formel (I) des Pastenharzes von Monoisocyanaten mit 6 bis 22 C-Atomen oder von teilverkappten Polyisocyanaten mit einer Gesamt-C-Zahl von 10 bis 50 ableiten.

**6.** Pigmentpaste nach mindestens einem der Ansprüche 1 bis 5, dadurch gekennzeichnet, daß das mittlere Molekulargewicht ($\overline{M}n$) des Pastenharzes 1000 bis 5000 beträgt.

**7.** Pigmentpaste nach mindestens einem der Ansprüche 1 bis 6, dadurch gekennzeichnet, daß die OH-Zahlen des Pastenharzes 10 bis 200 mg KOH/g betragen.

**8.** Pigmentpaste nach mindestens einem der Ansprüche 1 bis 7, dadurch gekennzeichnet, daß die Menge an quaternärem Stickstoff des Pastenharzes pro Gramm 0,2 bis 20 Milliäquivalente beträgt.

**9.** Pigmentpaste nach mindestens einem der Ansprüche 1 bis 8, dadurch gekennzeichnet, daß das Pastenharz verkappte Isocyanatreste enthält, die unter den Härtungsbedingungen entkappen.

**10.** Pigmentpaste nach mindestens einem der Ansprüche 1 bis 9, dadurch gekennzeichnet, daß das Pastenharz hergestellt wird, indem man zunächst Polyamine (A) mit Verbindungen (B), die mindestens eine cyclische Carbonatgruppe sowie gegebenenfalls OH-Gruppen, 1,2-Epoxidgruppen und Urethan-Gruppen enthalten, so umsetzt, daß dieses Umsetzungsprodukt (C) noch quaternierbare Aminogruppen aufweist, und dieses Umsetzungsprodukt (C), gegebenenfalls nach vorheriger Reaktion mit Monoisocyanaten mit 6 bis 22 C-Atomen oder mit teilverkappten, noch eine freie NCO-Gruppe aufweisenden Polyisocyanaten, dann quaterniert.

**11.** Pigmentpaste nach Anspruch 10, dadurch gekennzeichnet, daß man zur Herstellung des Pastenharzes als Polyamine (A) Diamine einsetzt, die diprimär sind ($A_2$) und/oder die neben einer primären Aminogruppe eine sekundäre oder tertiäre Aminogruppe ($A_1$) enthalten.

**12.** Pigmentpaste nach Anspruch 10 und/oder 11, dadurch gekennzeichnet, daß man zur Herstellung des Pastenharzes als Verbindungen (B) solche der Formel (IV)

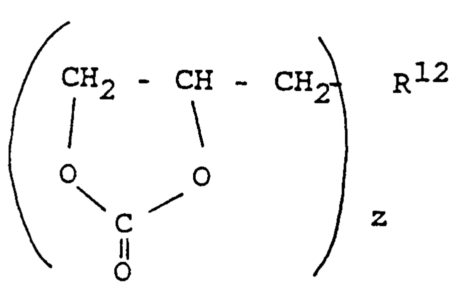

(IV)

einsetzt, in der bedeuten:

$R^{12}$ = z-wertiger Rest eines Polyethers, Polyetherpolyols, Polyesters, Poly-esterpolyols, der gegebenenfalls auch ($NR^{13}$)-Gruppen enthalten kann, wobei $R^{13}$ für Wasserstoff, Alkyl mit 1 bis 14 C-Atomen oder Hydroxyalkyl mit 1 bis 14 C-Atomen steht, oder einen z-wertigen Kohlenwasserstoffrest, vorzugsweise Alkylenrest mit 2 bis 18 C-Atomen, der gegebenenfalls auch inerte Gruppen tragen kann,
oder

einen z-wertigen Poly(sek.)aminrest oder
den z-wertigen Rest eines Umsetzungsproduktes einer Epoxy-Carbonat-Verbindung mit Polyaminen, Polyolen, Polycaprolactonpolyolen, OH-gruppenhaltigen Polyestern, Polyethern, Polyglykolen, hydroxy-, carboxyl- und eminofunktionellen Polymerölen mit mittleren Molekulargewichten von 800 bis 10000, Polycarbonsäuren, hydroxy- oder aminofunktionellen Polytetrahydrofuranen und Reaktionsprodukten von Polyaminen mit Glycidylestern von α,α-Dialkylalkanmonocarbonsäuren der Summenformel $C_{12-14}H_{22-26}O_3$ oder mit Versaticsäureglycidylester,

z = 1 bis 5, vorzugsweise 2.

**13.** Pigmentpaste nach mindestens einem der Ansprüche 10 bis 12, dadurch gekennzeichnet, daß zur Herstellung des Pastenharzes $(A_1)$, $(A_2)$ und (B) in Mengen von 28 bis 80 Mol-%, 0 bis 40 Mol-% und 20 bis 60 Mol-% eingesetzt werden.

**14.** Pigmentpaste nach Anspruch 10, dadurch gekennzeichnet, daß zur Herstellung des Pastenharzes die Umsetzung von (A) und (B) bei Temperaturen von 50 bis 140 °C erfolgt.

**15.** Pigmentpaste nach mindestens einem der Ansprüche 10 bis 14, dadurch gekennzeichnet, daß die Quarternierung durch Umsetzung von (C) mit einem Monoepoxid zur Herstellung des Pastenharzes im sauren Milieu erfolgt.

**16.** Verwendung der Pigmentpaste gemäß mindestens einem der Ansprüche 1 bis 15 zur Herstellung von pigmentierten Lacken.

## Claims

**1.** Pigment paste comprising a pigment and a paste resin, wherein said paste resin comprises (a) quaternary ammonium groups, (b) OH-groups, (C) urethane radicals and (d) groups of the general formula (I)

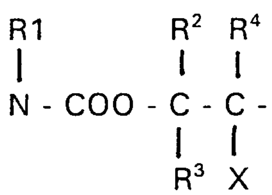

(I),

in which $R^1$ ro $R^4$ independently of one another represent hydrogen or a hydrocarbon radical of 1 to 10 carbon atoms, and X denotes hydroxyl or an isocyanate radical, the average moleculat weight ($\overline{M}n$) of these paste resins being 500 to 10,000, and the ratio pigment; paste resin being greater than 2:1.

**2.** The pigment paste as claimed in claim 1, wherein the paste resin contains on average 1 to 4 of the groups (a) and 1 to 6 of the groups (d) per molecule.

**3.** The pigment paste as claimed in claim 1 and/or 2, wherein the number of the groups (b) in the paste resin is on average 1 to 20 per molecule.

**4.** The pigment paste as claimed in at least one of claims 1 to 3, wherein the number of the groups (c) in the paste resin is about 1 to 6 per molecule.

**5.** The pigment paste as claimed in at least one of claims 1 to 4, wherein the urethane radicals (c) and X in the formula (I) of the paste resin are derived from monoisocyanates of 6 to 22 carbon atoms or from partly masked polyisocyanates of a total number of carbon atoms of 1o to 50.

**6.** The pigment paste as claimed in at least one of claims 1 to 5, wherein the average molecular weight ($\overline{M}n$) of the paste resin is 1000 to 5000.

**7.** The pigment paste as claimed in at least one of claims 1 to 6, wherein the paste resin has hydroxyl values of 10 to 200 mg of KOH/g.

**8.** The pigment paste as claimed in at least one of claims 1 to 7, wherein the amount of quaternary nitrogen contained in the paste resin is 0.2 to 20 milliequivalents per gram.

**9.** The pigment paste as claimed in at least one of claims 1 to 8, wherein the paste resin contains masked isocyanate radicals which are demasked under the curing conditions.

**10.** The pigment paste as claimed in at least one of claims 1 to 9, wherein the paste resin is prepared by first reacting of polyamines (A) with compounds (B) which contain at least one cyclic carbonate group and, optionally, OH-groups, 1,2-epoxide groups and isocyanate groups, in such a manner that this reaction product (C) still contains quaternizable amino groups, and by then quaternizing this reaction product (C), optionally after a prior reaction with monoisocyanates of 6 to 22 carbon atoms or with partly masked polyisocyanates still having one free NCO group.

**11.** The pigment paste as claimed in claim 10, wherein diamines which are diprimary ($A_2$) and/or which in addition to a primary amino group contain a secondary or tertiary amino group ($A_1$) are used as polyamines (A) for the preparation of the paste resin.

**12.** The pigment paste as claimed in claim 10, wherein as the compounds (B) compounds of the formula (IV)

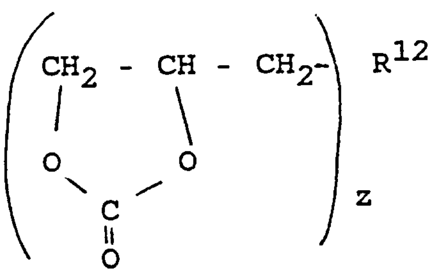

(IV)

are used for preparing the paste resin, in which formula

$R^{12}$ denotes a z-valent radical of a polyether, polyether polyol, polyester, polyester polyol, which can also optionally contain ($NR^{13}$) groups, $R^{13}$ representing hydrogen, alkyl of 1 to 14 carbon atoms or hydroxyalkyl of 1 to 14 carbon atoms, or denotes a z-valent hydrocarbon radical, preferably an alkylene radical of 2 to 18 carbon atoms which can optionally also carry inert groups, or denotes a z-valent poly(sec.)amine radical or denotes the z-valent radical of a reaction product of an epoxide-carbonate compound with polyamines, polyols, polycaprolactone, polyols, hydroxyl group-containing polyesters, polyethers, polyglycols, hydroxyl function-containing, carboxyl function-containing and amino function-containing polymeric oils having average molecular weights of 800 to 10,000, polycarboxylic acids, hydroxyl function-containing or amino function-containing polytetrahydrofurans and reaction products of polyamines with glycidyl esters of $\alpha,\alpha$-dialkylalkanemonocarboxylic acids of the empirical formula $C_{1-14}H_{22-26}O_3$ or with glycidyl versatate,

z denotes 1 to 5.

**13.** The pigment paste as claimed in at least one of claims 10 to 12, wherein ($A_1$), ($A_2$) and (B) are used in amounts of 28 to 80 mole %, 0 to 40 mole % and 20 to 60 mole % for preparing the paste resin.

**14.** The pigment paste as claimed in claim 10, wherein, for preparing the paste resin, (A) and (B) are reacted at temepratures of 50 to 140 °C.

**15.** The pigment paste as claimed in at least one of claims 10 to 14, wherein, for preparing the paste resin, the quaternization is carried out by reacting (C) with a monoepoxide in an acid medium.

16. Use of the pigment paste as claimed in at least one of claims 1 to 15 for the preparation of pigmented paints.

**Revendications**

1. Pâte de pigment, comportant un pigment et une résine de pâte, caractérisée en ce que la résine de pâte comporte (a) des groupes d'ammonium quaternaire, (b) des groupes OH, (c) des restes uréthannes et (d) des groupes de formule (I)

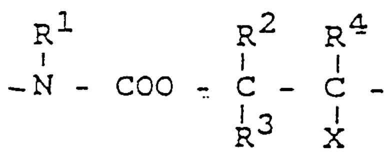

(I),

dans laquelle $R^1$ à $R^4$, indépendamment les uns des autres, représentent l'hydrogène ou un reste hydrocarboné ayant de 1 à 10 atomes de C et X représente l'hydroxyle ou un reste uréthanne, le poids moléculaire moyen ($\overline{M}n$) de cette résine de pâte étant de 500 à 10 000, et le rapport pigment : résine de pâte étant supérieur à 2:1.

2. Pâte de pigment selon la revendication 1, caractérisée en ce que la résine de pâte comporte par molécule en moyenne de 1 à 4 groupes (a) et de 1 à 6 groupes (d).

3. Pâte de pigment selon la revendication 1 et/ou la revendication 2, caractérisée en ce que le nombre de groupes (b) dans la résine de pâte est en moyenne de 1 à 20 par molécule.

4. Pâte de pigment selon au moins une des revendications 1 à 3, caractérisée en ce que le nombre de groupes (c) dans la résine de pâte est de 1 à 6 par molécule.

5. Pâte de pigment selon au moins une des revendications 1 à 4, caractérisée en ce que le reste uréthanne (c) et X dans la formule (I) de la résine de pâte dérivent de monoisocyanates ayant de 6 à 22 atomes de C ou de polyisocyanates partiellement couronnés, avec un nombre total de C de 10 à 50.

6. Pâte de pigment selon au moins une des revendications 1 à 5, caractérisée en ce que le poids moléculaire moyen ($\overline{M}n$) de la résine de pâte est de 1000 à 5000.

7. Pâte de pigment selon au moins une des revendications 1 à 6 caractérisée en ce que le nombre des OH de la résine de pâte est de 10 à 200 mg KOH/g.

8. Pâte de pigment selon au moins une des revendications 1 à 7, caractérisée en ce que la quantité d'azote quaternaire de la résine de pâte est de 0,2 à 20 Milliéquivalents par gramme.

9. Pâte de pigment selon au moins une des revendications 1 à 8, caractérisée en ce que la résine de pâte comporte des restes isocyanates couronnés qui perdent leur couronne dans les conditions du durcissement.

10. Pâte de pigment selon au moins une des revendications 1 à 9, caractérisée en ce que la résine de pâte est obtenue en faisant réagir tout d'abord des polyamines (A) avec des composés (B) qui comportent au moins un groupe carbonate cyclique ainsi éventuellement que des groupes OH, des groupes 1,2-époxy et des groupes uréthannes de telle sorte que ce produit de réaction (C) comporte encore des groupes amino pouvant être transformés en ammonium quaternaire, et en ce que ce produit de réaction (C), éventuellement après une réaction préalable avec des monoisocyanates ayant de 6 à 22 atomes de C, ou avec des polyisocyanates partiellement couronnés qui présentent encore un groupe NCO libre, est alors quaternisé.

**11.** Pâte de pigment selon la revendication 10, caractérisée en ce que, pour préparer la résine de pâte, on utilise comme polyamines (A) des diamines qui sont 2 fois primaires ($A_2$) et/ou qui comportent en plus d'un groupe amino primaire un groupe amino ($A_1$) secondaire ou tertiaire.

**12.** Pâte de pigment selon la revendication 10 et/ou la revendication 11, caractérisée en ce que pour préparer la résine de pâte, on utilise comme composés (B) ceux qui ont la formule (IV)

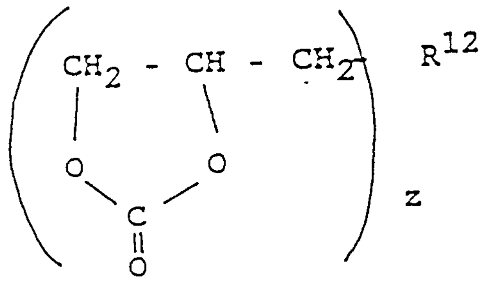

(IV)

dans laquelle on a les significations suivantes :
$R^{12}$ : un reste de valence z, d'un polyéther, d'un polyétherpolyol, d'un polyester, d'un polyesterpolyol, qui peut aussi éventuellement comporter des groupes ($NR^{13}$) où $R^{13}$ représente l'hydrogène, un alkyle ayant de 1 à 14 atomes de C ou un hydroxyalkyle ayant de 1 à 14 atomes de C, ou un reste hydrocarboné de valence z, de préférence un reste alkylène ayant de 2 à 18 atomes de C, qui peut aussi comporter des groupes inertes,
ou
un reste poly(sec.)amine de valence z ou
le reste de valence z d'un produit de réaction d'un composé époxy-carbonate avec des polyamines, des polyols, des polycaprolactonepolyols, des polyesters comportant des groupes OH, des polyéthers, des polyglycols, des huiles polymères comportant des fonctions hydroxy, carboxyle et amino, avec un poids moléculaire moyen de 800 à 10 000, des acides polycarboxyliques, des polytétrahydrofurannes avec des fonctions hydroxy ou amino, et les produits de réaction de polyamines avec des esters glycidyles d'acides $\alpha,\alpha$-dialkylalcanemonocarboxyliques de formule globale $C_{12-14}H_{22-26}O_3$, ou avec l'ester glycidyle de l'acide versatique,
z : représente de 1 à 5, de préférence 2.

**13.** Pâte de pigment selon au moins une des revendications 10 à 12, caractérisée en ce que, pour préparer la résine de pâte, on utilise ($A_1$), ($A_2$)et (B) dans des quantités de 28 à 80 moles-%, de 0 à 40 moles-% et de 20 à 60 moles-%.

**14.** Pâte de pigment selon la revendication 10, caractérisée en ce que, pour préparer la résine de pâte, la réaction de (A) et de (B) s'effectue à des températures de 50 à 140 ° C.

**15.** Pâte de pigment selon au moins une des revendications 10 à 14, caractérisée en ce que la quaternisation est obtenue par réaction de (C) avec un monoépoxyde pour préparer la résine de pâte dans un milieu acide.

**16.** Utilisation de la pâte de pigment selon au moins une des revendications 1 à 15 pour préparer des vernis pigmentés.